# EUROPEAN PATENT SPECIFICATION

(11) **EP 0 474 699 B1**
(45) Date of publication and mention of the grant of the patent: **20.10.1993**
(21) Application number: 90908311.5
(22) Date of filing: 23.05.1990
(51) Int. Cl.: F16L 59/12, F16L 59/14

(54) **METHOD FOR PRODUCING LONG, ISOLATED PIPES IN THE FORM OF A SANDWICH CONSTRUCTION**
VERFAHREN ZUM HERSTELLEN VON LANGEN ISOLIERTEN ROHREN IN SANDWICHKONSTRUKTION
PROCEDE DE FABRICATION DE TUYAUX LONGS, ISOLES ET A STRUCTURE EN SANDWICH

(30) Priority: 25.05.1989 GB 8912059
(43) Date of publication of application: 18.03.1992
(73) Proprietor: BAKELITTFABRIKKEN A/S, N-0975 Oslo 9 (NO)
(72) Inventor: RINGDAL, Jan, Otto, N-0389 Oslo 3 (NO)
(74) Representative: Cline, Roger Ledlie
(86) International application number: NO9000092
(87) International publication number: WO9014552

(56) References cited:
- EP-A- 0 340 123
- FR-A- 2 594 933
- US-A- 2 857 931

## Description

The present invention relates to a method for producing long pipes with a main tube which is isolated with a pressure and heat resistant insulation, in the form of sandwich constructions.

The use of pipes for transport of media has become of great importance and such transport will in the future be further extended. In order to improve the flowability of the transported medium and in order to avoid damages and other problems caused for instance by low temperatures and freezing, it has been of great importance to insulate the constructions. By water supply pipe lines and the like large costs may also be saved, as insulated pipes and tubes may be placed in shallow ditches instead of being positioned so deep that they do not freeze. By pipelines in rocky areas the costs for ditching will often be the largest cost.

In FR-A-2 594 933 there is described a method for producing insulated pipes by which a foam material is injected into the space between an outer and an inner tube. The disadvantage is that there is no possibility of controlling the quality of the foam isolation with respect to air pockets and the like, and only a limited selection of foam materials may be used.

Insulated pipelines for transport of oil and the like are to a great extent also used offshore at large sea depths. It is thereby important to maintain the oil at a certain temperature during the whole transport, as this will also improve the capacity of the pipeline. For pipes submerged to a large depth the insulation of the pipe must also be able to resist large pressures and must be given a structure which does not collapse so that no moisture can penetrate and thereby reduce the insulation properties.

According to the present invention there is provided a method of producing long pipes as set out in claim 1. Optional features of the invention include: in both ends of the main tube or main pipe, flanges are placed, which are able to resist an axial pressure against the tube-formed insulation and at the same time are able to act as sealing against the main pipe. Between the main pipe and the applied surrounded pipe, distance elements are provided, having the width which is desired in order to form a stop and fastening layer which at a large pressure is ejected into a space between the pipes from one end to an overflow at the other end of the pipe. Preferably a hardener has been added to the binding material which has been filled into the space. The binding material must be form stable so that no cavities due to sinking or shrinking will occur, and it must have a good adhesion to both pipes.

In some instances it will be desirable with a combined reinforcement, and glass/mineral-threads, -fibres or -cuts or the like can be mixed into the material. In other cases it will be desirable that the binding material also should be insulating; insulating substances are then added.

In order to illustrate the invention better a drawing is enclosed, showing schematically an embodiment of the invention.
Figure 1 illustrates a section of pipe produced according to the invention,
Figure 2 is a perspective view illustrating the use of the method according to the invention, and
Fig. 3 shows in perspective a detail of a tube with distance elements and the provision of a protection web.

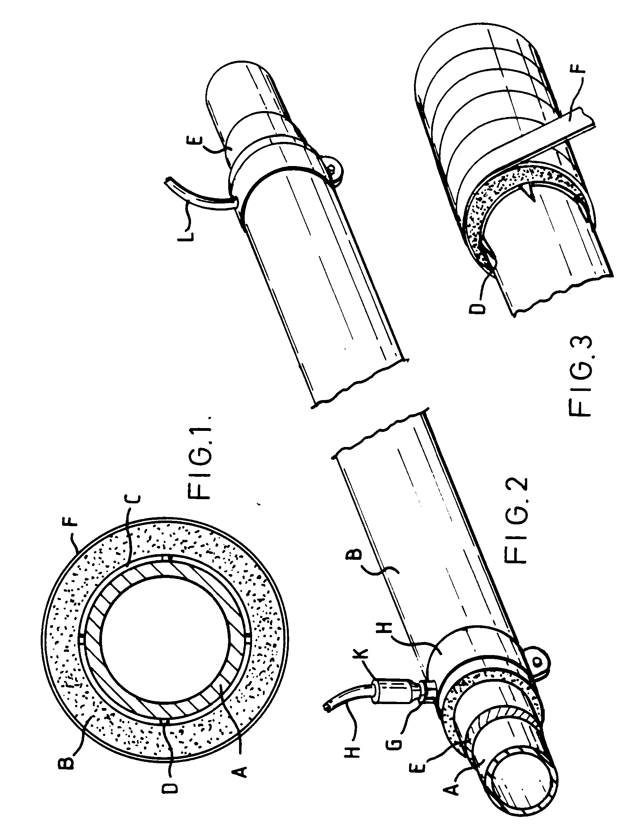

On the enclosed drawing a possible embodiment of the invention is shown, with the production of a sandwich construction of a pipe, consisting of a main pipe A and an applied covering B of a prefabricated insulating material. Between A and B an adhesive binding material is to be incorporated. The reference number for this material is C. The material C is supplied through a supply tube M. The reference number D is indicating distance elements which adjust the thickness or width of the adhesive binding material layer around the main pipe A. In both ends a compressing/sealing flange E is adapted. For supplying the stopping/binding agents the outer tube or covering B has been provided with a reinforcing strip H which carries a fastening means for the mouth piece K on the supply pipe or conduit C for the adhesive binding material. In the other end of the pipe there has been provided an overflow L which also has been fixed by means of a strip of the same type as the strip H. On Fig. 3 it is shown how a clothing is applied on the outer covering B which is wound onto the covering by extruding.

## Claims

1. Method for producing long pipes, with a main tube (A) which is insulated with a pressure and heat resistant isolation, in the form of sandwich constructions, **characterized** **in** that the insulation (B) is provided on the main tube (A) in the form of one or more layers of prefabricated tube formed blanks of thermally insulating material with a space between the main tube (A) and the blank (B), and that an adhesive binding material (C) is injected into said space for establishing the sandwich construction.

2. Method for producing long, isolated pipes in the form of sandwich constructions, according to claim 1, **characterized** **in** that the adhesive binding material (C) is form-stable, that a hardener is added and that the material is incorporated for bonding at a high pressure.

3. Method for producing long, isolated pipes in the form of sandwich constructions, according to claim 1 or 2, **characterized in** that between applied, prefabricated pipe blanks (B) and the main pipe (A), suitable distance elements (D) have been provided, which let the flow of adhesive binding material (C) pass and which maintains an equal distance between pipe and blank, or between the blanks.

4. Method for producing long, isolated pipes in the form of sandwich constructions, according to any of the claims 1 to 3, **characterized** **in** that adjustable flanges (E) during the introduction of the adhesive binding material are pressed hard against the pipe blanks (B) and are placed in a sealing position to the cavity between the pipes.

5. Method for producing long, insulated pipes in the form of sandwich constructions, according to any of the claims 1 to 4, **characterized** **in** that the pipe blank (B) at the introduction site (G) for the adhesive binding material (C) has been surrounded by a reinforcement web (H) with a fastening means for a mouth piece (K) during the introduction of the adhesive binding material (C).

6. Method for producing long, isolated pipes in the form of sandwich constructions, according to any of the claims 1 to 5, **characterized in** that a further protecting clothing (F) of flexible plastics is wound, preferably by extruding, on the pipe blank element (B) which is positioned on the pipe (A).

## Patentansprüche

1. Verfahren zur Herstellung langer als Sandwichkonstruktion ausgebildeter Rohre mit einer Hauptröhre (A), die mit einer druck- und wärmebeständigen Isolierung isoliert ist, dadurch gekennzeichnet, daß die Isolierung (B) an der Hauptröhre (A) in Gestalt einer oder mehrerer Schichten vorgefertigter als Röhren ausgebildeter Zuschnitte aus thermisch isolierendem Material mit einem Zwischenraum zwischen der Hauptröhre (A) und dem Zuschnitt (B) vorgesehen ist und daß ein Klebe-Bindematerial (C) zur Errichtung der Sandwichkonstruktion in diesen Zwischenraum eingespritzt wird.

2. Verfahren zur Herstellung langer, isolierter als Sandwichkonstruktion ausgebildeter Rohre gemäß Anspruch 1, dadurch gekennzeichnet, daß das Klebe-Bindematerial (C) formstabil ist, daß ein Härter zugesetzt wird und daß das Material zum Verbinden unter hohem Druck eingeführt wird.

3. Verfahren zur Herstellung langer, isolierter als Sandwichkonstruktion ausgebildeter Rohre gemäß Anspruch 1 oder 2, dadurch gekennzeichnet, daß zwischen den aufgetragenen, vorgefertigten Rohrzuschnitten (B) und dem Hauptrohr (A) geeignete Abstandselemente (D) vorgesehen sind, die den Fluß von Klebe-Bindematerial (C) passieren lassen und die einen gleichen Abstand zwischen dem Rohr und dem Zuschnitt bzw. zwischen den Zuschnitten aufrechterhalten.

4. Verfahren zur Herstellung langer, isolierter als Sandwichkonstruktion ausgebildeter Rohre gemäß einem der Ansprüche 1 bis 3, dadurch gekennzeichnet, daß einstellbare Flansche (E) während des Einführens des Klebe-Bindematerials stark gegen die Rohrzuschnitte (B) gepreßt und bezüglich des Hohlraums zwischen den Rohren in einer Abdichtungsstellung plaziert werden.

5. Verfahren zur Herstellung langer, isolierter als Sandwichkonstruktion ausgebildeter Rohre gemäß einem der Ansprüche 1 bis 4, dadurch gekennzeichnet, daß der Rohrzuschnitt (B) am Einführungsort (G) für das Klebe-Bindematerial (C) während der Einführung des Klebe-Bindematerials (C) von einem Verstärkungskragen (H) mit einer Befestigungseinrichtung für ein Mündungsstück (K) umgeben ist.

6. Verfahren zur Herstellung langer, isolierter als Sandwichkonstruktion ausgebildeter Rohre gemäß einem der Ansprüche 1 bis 5, dadurch gekennzeichnet, daß eine weitere Schutzumhüllung (F) aus flexiblem Kunststoff auf das auf dem Rohr (A) gelegene Rohrzuschnittselement (B) gewickelt wird, und zwar bevorzugt durch Extrudieren.

## Revendications

1. Méthode pour la fabrication de longs tuyaux, avec un tube principal (A) qui est isolé par une isolation résistante à la pression et à la chaleur, sous forme de constructions en sandwich, caractérisée en ce que l'isolation (B) est prévue sur le tube principal (A) sous forme d'une ou plusieurs couches de pièces découpées en forme de tube préfabriquées en matière thermiquement isolante avec un intervalle entre le tube principal (A) et la pièce découpée (B), et en ce qu'une matière de liaison adhésive (C) est injectée dans ledit intervalle afin d'établir la construction en sandwich.

2. Méthode pour la fabrication de longs tuyaux isolés sous forme de constructions en sandwich, selon la revendication 1, caractérisée en ce que la matière de liaison adhésive (C) est de forme stable, en ce qu'un durcisseur est ajouté et en ce que la matière est incorporée afin de souder sous une pression élevée.

3. Méthode pour la fabrication de longs tuyaux isolés sous forme de constructions en sandwich, selon la revendication 1 ou 2, caractérisée en ce que entre des pièces découpées de tuyaux préfabriquées appliquées (B) et le tuyau principal (A), des éléments de distance appropriés (D) ont été prévus, lesquels laissent passer l'écoulement de matière de liaison adhésive (C) et qui maintiennent une distance égale entre le tuyau et la pièce découpée, ou entre les pièces découpées.

4. Méthode pour la fabrication de longs tuyaux isolés sous forme de constructions en sandwich, selon l'une quelconque des revendications 1 à 3, caractérisée en ce que des brides ajustables (E) pendant l'introduction de la matière de liaison adhésive sont pressées fortement contre les pièces découpées de tuyaux (B) et sont placées dans une position d'étanchéité de la cavité entre les tuyaux.

5. Méthode pour la fabrication de longs tuyaux isolés sous forme de constructions en sandwich, selon l'une quelconque des revendications 1 à 4, caractérisée en ce que la pièce découpée de tuyau (B) au site d'introduction (G) de la matière de liaison adhésive (C) a été entourée d'une bande de renforcement (H) à moyen de fixation pour une embouchure (K) pendant l'introduction de la matière de liaison adhésive (C).

6. Méthode pour la fabrication de longs tuyaux isolés sous forme de constructions en sandwich, selon l'une quelconque des revendications 1 à 5, caractérisée en ce qu'un tissu de protection supplémentaire (F) en plastique souple est enroulé, de préférence par extrusion, sur l'élément de pièce découpée de tuyau (B) qui est positionné sur le tuyau (A).
